# EUROPEAN PATENT SPECIFICATION

(11) **EP 0 427 483 B1**
(45) Date of publication and mention of the grant of the patent: **22.06.1994**
(21) Application number: 90312062.4
(22) Date of filing: 02.11.1990
(51) Int. Cl.: A01F 29/00, A01K 5/00, A23N 17/00

(54) **Apparatus for breaking up blocks of fibrous material**
Vorrichtung zum Zerkleinern von Silageblöcken
Machine pour le désintégration de blocs de matières fibreuses

(30) Priority: 08.11.1989 IE 358389
(43) Date of publication of application: 15.05.1991
(73) Proprietor: SALFORD ENGINEERING LIMITED, Borris, County Carlow (IE)
(72) Inventor: Keenan, Richard, Station Road, Bagenalstown (IE); Moore, Richard Christopher, Bagenalstown, County Carlow (IE)
(74) Representative: Gorman, Francis Fergus

(56) References cited:
- EP-A- 0 029 095
- EP-A- 0 061 666
- DE-A- 3 316 864
- DE-A- 3 708 218
- GB-A- 1 036 022
- GB-A- 2 139 911
- US-A- 2 954 176

## Description

The present invention relates to a method and apparatus for breaking up blocks of fibrous material and mixing the fibrous material, the apparatus being of the type comprising a container defining a hollow interior region and an open mouth to the interior region, a mixing rotor for mixing the material rotatably mounted about a rotational axis in the hollow interior region below the open mouth.

Such apparatus is used extensively for mixing ingredients of animal feed. In general, the apparatus comprise a dispensing outlet and means for dispensing the mixed animal feed through the dispensing outlet. The apparatus, in general, is suitable for mixing silage with other ingredients of the animal feed, provided the silage is supplied to the apparatus in relatively small lumps, typically lumps of not more than 20 kilograms weight. However, with the increasing mechanisation of the agricultural industry, it is becoming impractical to feed silage into such apparatus in small lumps. Silage is now cut from a silage pit in relatively large blocks or slabs, typically, a block or slab of silage may weigh from 50 to 2,000 kilograms weight or even more. The silage blocks may be cut from the silage pit either by a relatively large excavator bucket mounted on a back acter arm of a tractor, or alternatively, the silage block may be ripped from the silage pit by a grab. It has been found that known apparatus for mixing silage with other animal feed ingredients, in general, is not capable of coping with blocks of silage of such size. In general, it has been found that the silage, being a fibrous material, tends to remain in one homogenous mass in the mixing apparatus, and thus, inadequate mixing takes place. Further, it has been found that by virtue of the fact that the block of silage remains in a single homogenous mass, a considerable additional load is placed on the rotor of the apparatus which may cause damage to the rotor and/or fracture of the main rotor shaft. This accordingly is undesirable. US-A-2,954,176 discloses a hammer mill with an inlet throat of variable cross-section for reducing whole bales of hay and the like. The hammer mill comprises a casing and a rotary mechanism rotatable within the casing. The rotary mechanism comprises a plurality of discs which carry hammers for reducing the bales of hay. The throat is formed by two opposite inlet walls extending between end walls. The inlet walls are pivotally mounted and are pivotal towards and away from each other for varying the throat cross-section. An elongated baffle member extending longitudinally of the hammer mill axis is provided in the casing to prevent overloading of the hammer mill.

There is therefore a need for apparatus for breaking up a block of fibrous material and mixing the fibrous material.

The present invention is directed towards providing such an apparatus and a method for breaking up and mixing a block of fibrous material.

The present invention overcomes the problems of prior art apparatus by virtue of the fact that the apparatus for breaking up and mixing fibrous material according to the invention comprises a container defining a hollow interior region and an open mouth to the interior region, a mixing rotor for mixing the material rotatably mounted about a rotational axis in the hollow interior region below the open mouth wherein at least one elongated stationary blade is mounted above the mixing rotor and spaced apart from the periphery of the mixing rotor adjacent the open mouth for engaging the block of fibrous material and for co-operating with the mixing rotor for breaking up the block of fibrous material, the stationary blade extending transversely relative to the rotational axis of the mixing rotor for partly supporting the block of fibrous material above the mixing rotor and for receiving portions of the block of fibrous material on each side thereof so that on rotation of the mixing rotor the mixing rotor engages the said portions and rips the said portions separately from the block of fibrous material, and mounting means is mounted on the container for mounting the stationary blade to the container.

The advantages of the invention are many. Firstly, the apparatus breaks up and mixes blocks of fibrous material, for example, silage material of relatively large size, typically from 50 to 2,000 kilograms in weight. In fact, it has been found that provided the apparatus is built of sufficient strength and robustness, the apparatus can handle blocks of silage over 2,000 kilograms weight without any difficulty. Needless to say, the apparatus is also suitable for breaking up and mixing blocks of other fibrous material. By virtue of the fact that the apparatus breaks up the blocks of silage, thorough and even mixing of the silage material with other ingredients is achieved. Furthermore, damage to the rotor and rotor shaft is also avoided. By virtue of the fact that the stationary blade extends transversely relative to the rotational axis of the mixing rotor, the stationary blade in co-operating with the mixing rotor parts and separates portions of the fibrous material grabbed from the block of fibrous material by the mixing rotor.

In one embodiment of the invention, the mounting means is spaced apart from and to one side of a vertical plane extending upwardly from the rotational axis, the stationary blade extending generally in a direction towards the vertical plane and terminating in a free end. This feature of the invention provides a particularly advantageous construction of the apparatus.

In an embodiment of the invention, the mixing rotor comprises a mixing blade extending in a direction generally longitudinally of the rotational axis, the mixing blade defining the outer periphery of the mixing rotor, the stationary blade being located so that on rotation of the mixing rotor, as the mixing blade rotates to its top dead centre position relative to the container, the mixing blade is moving towards the free end of the stationary blade.

This is a particular advantageous construction of the apparatus, in that the mixing blade of the mixing rotor grabs portion of the fibrous material from the block of fibrous material with relative ease. Furthermore, the mixing blade is ideally suited for mixing the broken up fibrous material with other ingredients subsequently.

A further advantage of this feature of the invention is that portions of the fibrous material grabbed by the mixing blades are urged to engage the stationary blades as the mixing blade moves up to the top dead centre position and through the top dead centre position. This greatly facilitates the mixing blade subsequently ripping portion of the fibrous material from the block of fibrous material.

In a further embodiment of the invention, the stationary blade is located so that as the mixing blade is moving through its top dead centre position, the mixing blade is moving towards the free end of the stationary blade.

The advantage of this feature of the invention is that this positioning of the stationary blade further enhances the ripping action of the mixing blade ripping a portion of the fibrous material from the block of fibrous material.

Preferably, the free end of the stationary blade is located in a position not more than 25% of the diameter of the outer periphery of the mixing rotor from the vertical plane extending upwardly from the rotational axis.

The advantage of this feature of the invention is that it provides a particularly advantageous construction of apparatus and enhances the co-operating action between the mixing rotor and the stationary blade in breaking up the block of fibrous material.

Preferably, the stationary blade is located so that its free end is in a position a distance of not more than 15% of the diameter of the outer periphery of the mixing rotor from the vertical plane extending upwardly from the rotational axis. It has been found that by providing the free end of the stationary blade at a distance of approximately 15%, good results are achieved.

In another embodiment of the invention, the stationary blade is mounted adjacent the mixing rotor and at its nearest position relative to the mixing rotor, the stationary blade is spaced apart a distance from a locus of the outer periphery of the mixing rotor of not more than 120 mm.

The advantage of this feature of the invention is that it provides co-operation between the stationary blade and the mixing blade of the mixing rotor. However, it has been found that better results are achieved if the distance between the stationary blade at its nearest point and the locus is maintained below 90 mm. Within reason, it has been found that the nearer the stationary blade can be mounted to the locus at its nearest point, the more efficiently the apparatus breaks up the fibrous material.

In another embodiment of the invention, the stationary blade extends into the open mouth of the container, and extends in a generally inwardly, downwardly direction in the open mouth.

The advantage of this feature of the invention is that it further facilitates in the breaking up of the block of fibrous material.

In a still further embodiment of the invention, diverting means extend on each side of the stationary blade for diverting the fibrous material from the stationary blade, the diverting means extending transversely of the stationary blade.

The advantage of this feature of the invention is that the diverting means acts to deliver portions of the block of fibrous material which may spill over the side of the apparatus back into the open mouth of the apparatus. It has also been found that the diverting means further facilitates the breaking up of the fibrous material.

In one embodiment of the invention, the stationary blade comprises an elongated plate member having an upper edge and a lower edge, the upper edge converging downwardly towards the lower edge to form a lower tip defining the free end of the stationary blade, and the diverting means being provided on the stationary blade adjacent the upper edge at a position spaced apart from the lower tip.

The advantage of this feature of the invention is that it further facilitates the breaking up of the fibrous material.

In another embodiment of the invention, the container comprises a base of semi-cylindrical shape, and a straight side wall extending upwardly from one side of the base and a curved side wall extending in a generally upward direction from the other side of the base, the ends of the container being closed by a pair of end walls, the base and curved side wall defining an axis of generation substantially co-inciding with the rotational axis of the mixing rotor, the mixing rotor comprising a main shaft rotatably mounted in the end walls, and at least two mixing blades being spaced apart circumferentially around the shaft and being mounted on radial carrier members extending radially from the shaft.

The advantage of this feature of the invention is that it provides a particularly advantageous construction which can be relatively simply constructed and also provides an apparatus which particularly efficiently breaks up the fibrous material and furthermore efficiently mixes the fibrous material.

Preferably, a plurality of spaced apart parallel stationary blades are provided.

The advantage of this feature of the invention is that a more efficient apparatus is provided.

Additionally, the invention provides a method for breaking up and mixing a block of fibrous material using the apparatus according to the invention, the method comprising the steps of delivering the block of fibrous material into the open mouth of the container, rotating the mixing rotor to engage and urge the block of fibrous material against the at least one stationary blade for breaking up of the block, and for mixing broken up portions of the block with the mixing rotor, and wherein said rotating comprises rotating the mixing rotor for engaging and urging portions of the block on each side of the stationary blade, and comprises further rotating the mixing rotor for ripping the said portions of the block separately from the block.

The advantage of this feature of the invention is that it provides a method which is particularly efficient in breaking up and mixing blocks of fibrous material.

Additionally, the invention provides apparatus for breaking up a block of fibrous material and mixing the fibrous material, the apparatus comprising a container defining a hollow interior region and an open mouth to the interior region, a mixing rotor for mixing the material rotatably mounted about a rotational axis in the hollow interior region below the open mouth, wherein a mounting means is mounted on the container for mounting at least one elongated stationary blade above the mixing rotor spaced apart from the periphery of the mixing rotor adjacent the open mouth so that the block of fibrous material engages the stationary blade and the stationary blade co-operates with the mixing rotor for breaking up of the block of fibrous material, and wherein the mounting means mounts the stationary blade so that the stationary blade extends transversely relative to the rotational axis of the mixing rotor for partly supporting the block of fibrous material above the mixing rotor and for receiving portions of the block on each side thereof so that on rotation of the mixing rotor, the mixing rotor engages the said portions and rips the said portions separately from the block of fibrous material.

The advantage of this feature of the invention is that it provides a relatively simple construction of apparatus which is particularly suitable for mixing fibrous material and which can readily easily be adapted for breaking up blocks of fibrous material.

The invention will be more clearly understood from the following description of some preferred embodiments thereof, given by way of example only, with reference to the accompanying drawings, in which:
Fig. 1 is a perspective view of apparatus according to the invention for breaking up and mixing blocks of fibrous material,
Fig. 2 is a partly cut-away perspective view of the apparatus of Fig. 1,
Fig. 3 is a view similar to Fig. 2 of the apparatus of Fig. 1 in a different position,
Fig. 4 is a cross sectional end view of the apparatus of Fig. 1,
Fig. 5 is a plan view of the apparatus of Fig. 1,
Figs. 6(a) to (c) are end views similar to the end view of Fig. 4 illustrating the apparatus in different positions during operation of the apparatus,
Fig. 7 is a sectional view of portion of the apparatus of Fig. 1 in use on the lines VII-VII of Fig. 6(c),
Fig. 8 is a perspective view similar to Fig. 1 of apparatus according to another embodiment of the invention,
Fig. 9 is a sectional end view of the apparatus of Fig. 8,
Fig. 10 is a plan view of the apparatus of Fig. 8,
Figs. 11(a) to (c) are views similar to Figs. 6(a) to (c) of the apparatus of Fig. 8 in use, and
Fig. 12 is a section view of the apparatus in use on the line XII-XII of Fig. 11(c).

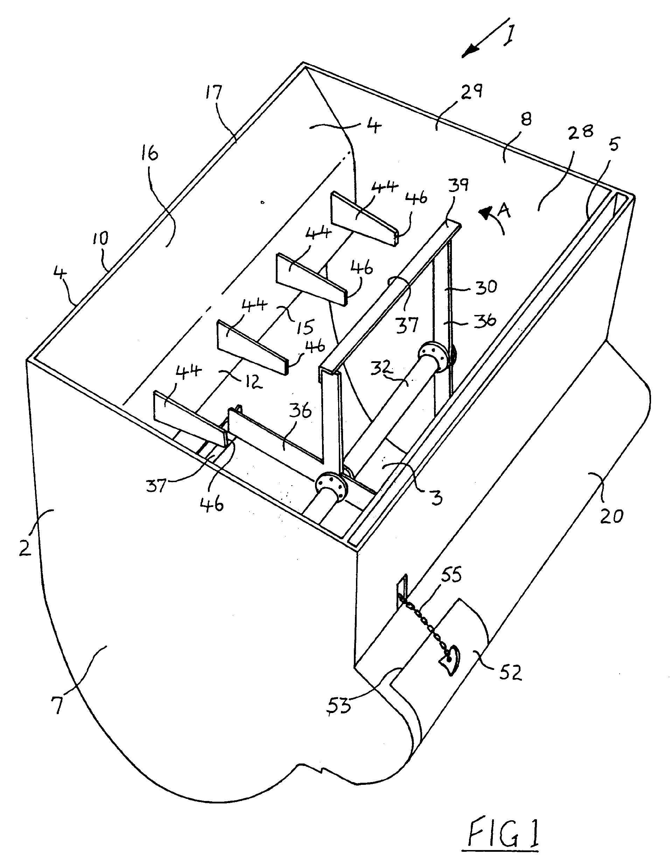

Referring to the drawings, and initially to Figs. 1 to 7, there is illustrated apparatus according to the invention indicated generally by the reference numeral 1 for breaking up blocks of fibrous material and mixing the material. The apparatus 1 is particularly suitable for breaking up relatively large blocks or slabs of silage material cut from a silage pit and for mixing other ingredients with the silage in the preparation of an animal feed. The apparatus 1 is suitable for breaking up and mixing blocks of silage of weight in the range of 50 to 2,000 kilograms, and particularly of weight in the range of 500 to 2,000 kilograms.

The apparatus 1 comprises a container 2 within which the blocks of silage are broken up and mixed as will be described below. The container 2 is supported on a chassis and ground engaging wheels, neither of which are illustrated, and is suitable for towing behind a tractor. The container 2 and chassis (not shown) are substantially similar to apparatus for mixing and dispensing feed material which is disclosed in British Patent Specification No. 2,139,911. Accordingly, only the aspects of the apparatus 1 relative to the present invention will be described in detail in this specification.

The container 2 is of steel plate material and comprises a semi-cylindrical base 3 and side walls 4 and 5 extending upwardly from sides of the base 3. End walls 7 and 8 close the container 2. The upstanding side wall 4 is of double skin construction having an outer panel 10 and an inner panel 12. The inner panel 12 comprises a curved wall 14 extending from the base 3 to an upstanding wall 15 which in turn extends to an outwardly upwardly directed inclined wall 16. The inclined wall 16 engages the outer panel 10 at 17. The side wall 5 defines with the base 3 an access opening 19 to a dispensing compartment 20 from which mixed animal feed is dispensed from the container 2 through a dispensing outlet 21. An auger screw 22 is rotatably mounted in the dispensing compartment 20 for dispensing the animal feed. The dispensing compartment of the apparatus 1 is similar to the dispensing compartment of the apparatus described and illustrated in British Patent Specification No. 2,139,911 and is only briefly described below.

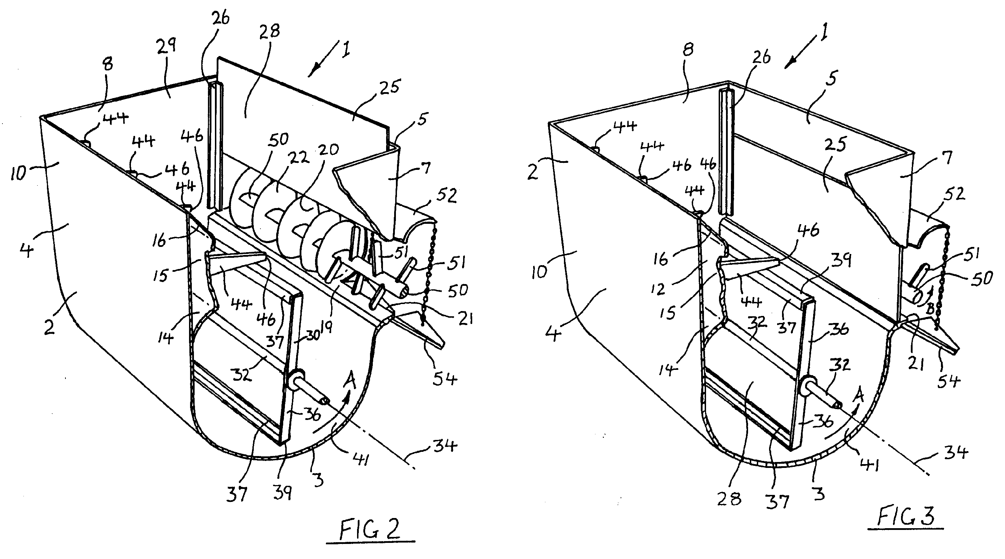

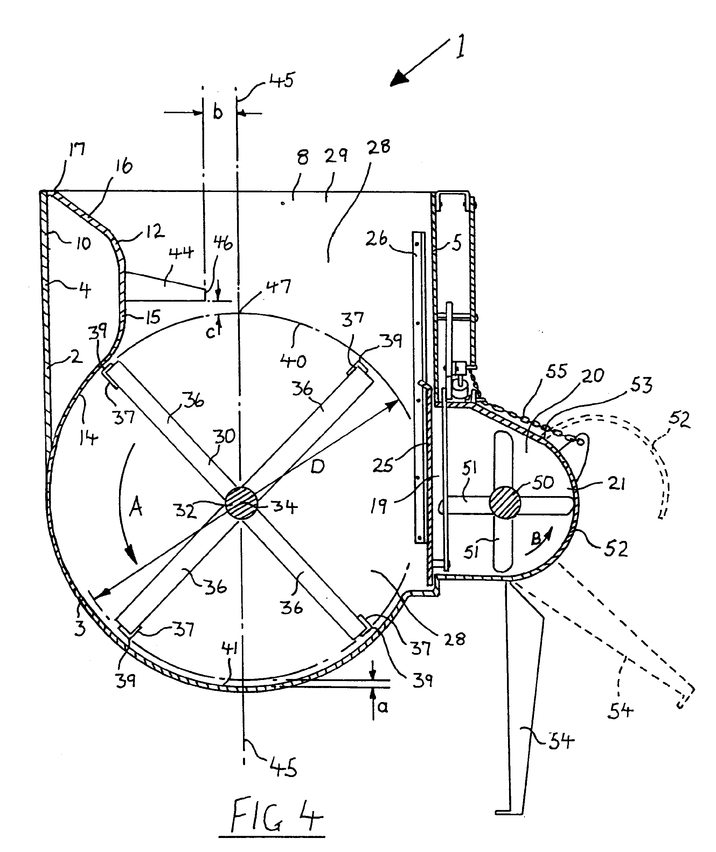

A closure member 25 is slidable in guides 26 mounted on the end walls 7 and 8 for closing the access opening 19. The closure member 25 is slidable from an open position illustrated in Fig. 2 to a closed position illustrated in Fig. 3 by a hydraulic ram (not shown). In the closed position, the closure member 25 co-operates with the side wall 5 to form a side wall extending upwardly from the side of the base 3. When the closure member 25 is in the closed position illustrated in Fig. 3, the base 3, side walls 4 and 5 and end walls 7 and 8 define a hollow interior region 28 within which the silage and other ingredients of the animal feed are mixed. The side walls 4 and 5 and end walls 7 and 8 define an open mouth 29 to the hollow interior region 28 through which the silage and ingredients of the animal feed are delivered into the region 28.

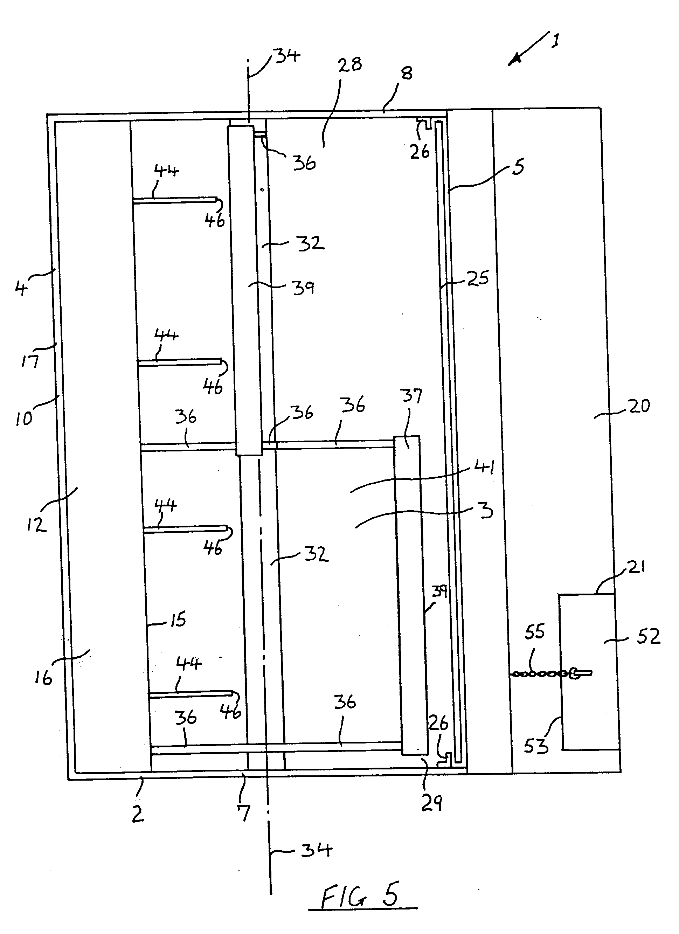

A mixing rotor 30 for mixing the silage and animal feed ingredients is rotatably mounted in the interior region 28. The mixing rotor 30 comprises a rotor shaft 32 which is rotatably mounted in bearings (not shown) in the end walls 7 and 8 about a rotational axis 34. The rotational axis 34 of the shaft 32 co-incide with an axis of generation of the semi-cylindrical base 3 and the curved wall 14. Carrier members 36 of steel extending radially from the rotor shaft 32 carry mixing blades 37 of angle section steel. The mixing blades 37 are welded to the carrier members 36 which are in turn welded to the shaft 32. The mixing blades are spaced apart from and extend longitudinally relative to the rotor shaft 32. The mixing blades 37 are arranged in pairs and are equi-spaced circumferentially around the shaft 32 at 180° intervals. The mixing blades 37 of each pair of mixing blades 37 are arranged at 90° to each other around the shaft 32. An outer peripheral edge 39 of the mixing blades 37 defines the outer periphery of the rotor 30 and a locus 40, see Fig. 4, as the mixing rotor 30 rotates. The outer peripheral edge 39 of the mixing blades 37 is of radius from the rotational axis 34 of the shaft 32 such that a clearance "a" of not more than 50 mm is provided between the locus 40 of the mixing blades 37 and an inner surface 41 of the base 3 and the curved wall 14, preferably, the clearance "a" is 10 mm to 15 mm.

Transmission means comprising sprockets and chains (not shown) are provided for driving the mixing rotor 30 in the direction of the arrow A. Provision (not shown) is also provided for driving the sprockets and chains from a power-take-off shaft of a tractor or other suitable drive means.

Four parallel, spaced apart, elongated stationary blades 44 of steel plate are welded to and extend from the upstanding wall 15 of the side wall 4 which act as mounting means for the stationary blades 44 to the container 2. The stationary blades 44 extend into the open mouth 29 above the mixing rotor 30 and co-operate with the mixing rotor 30 for breaking up the blocks of silage material as will be described below. The stationary blades 44 are equi-spaced from each other, and the spacing of the two stationary blades 44 adjacent the end walls 7 and 8 from the respective end wall 7 and 8 is half the spacing between adjacent stationary blades 44. The stationary blades 44 extends transversely relative to the rotational axis 34 of the mixing rotor 30 and towards a vertical plane 45 extending upwardly from the rotational axis 34. Each stationary blade 44 terminates in a free end 46 at a position short of the vertical plane 45. The distance "b" from the vertical plane 45 to the free ends 46 of the stationary blades 44 does not exceed 25% of the diameter D of the locus 40 of the outer peripheral edge 39 of the mixing rotor 30. Accordingly, as the rotor 30 rotates in the direction of the arrow A, the mixing blades 37 on passing upwardly towards their top dead centre position 47, see Fig. 4, and through the top dead centre position 47 move towards the free ends 46 of the stationary blades 44 for urging the block or blocks of silage against the stationary blades 44 for breaking up of the silage blocks. The top dead centre position 47 is defined by the line of intersection of the locus 40 of the outer periphery of the rotor 30 and the vertical plane 45 through the rotational axis 34 of the rotor 30. In this embodiment of the invention, the distance "b" of the free end 46 of the stationary blades 44 is approximately 15% of the diameter D of the locus 40 of the outer peripheral edges 39 of the rotor 30. The diameter D is 1,830 mm and the distance "b" is 10 mm to 15 mm. Each stationary blade 44 is spaced apart a distance "c" from the locus 40 of the outer peripheral edge 39 of the mixing rotor 30 at its nearest point. In this embodiment of the invention, the free ends 46 of the stationary blades 44 are the nearest point of the stationary blades 44 to the locus 40 and the distance "c" is 50 mm. Accordingly, the stationary blades 44 are arranged to co-operate with the mixing rotor 30 for breaking up of the silage blocks.

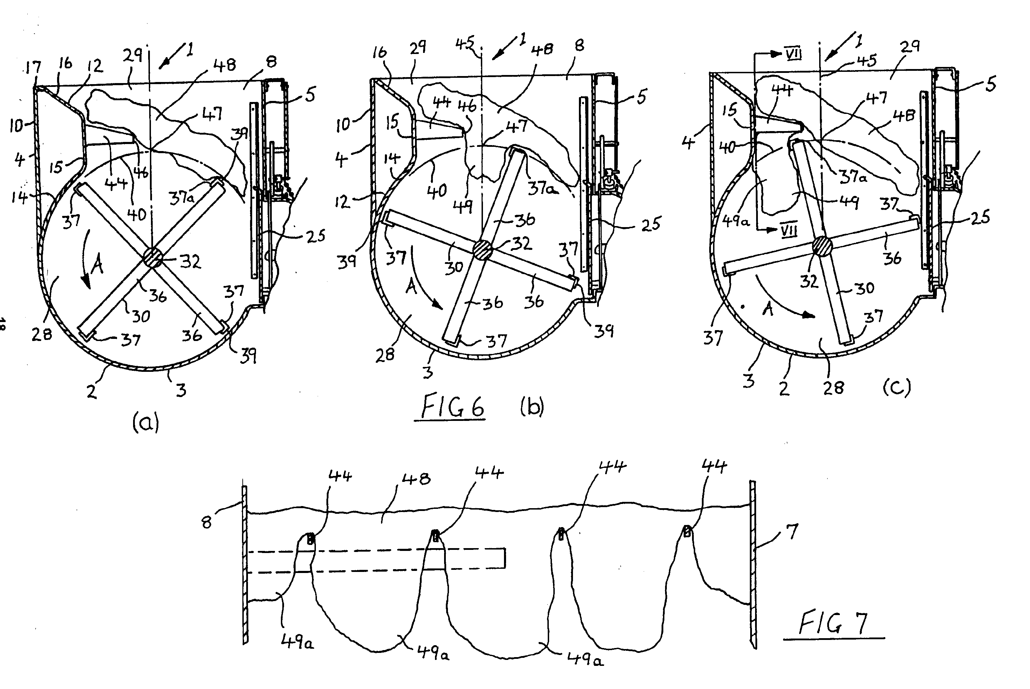

Referring to Figs. 6 and 7, a silage block of up to 2,000 kilograms weight which is indicated by the reference numeral 48 is illustrated in the container 2. On being placed in the open mouth 29 of the container 2, the silage block is partly supported on the stationary blades 44 and the mixing rotor 30. As the mixing rotor 30 rotates in the direction of the arrow A, and one of the mixing blades 37a moves through the positions illustrated in Figs. 6(a) to (c) upwardly to, and through the top dead centre position 47 towards the free ends 46 of the stationary blades 44, a portion 49 of the silage block 48 is grabbed by the mixing blade 37a and urged towards the stationary blades 44. As the mixing blade 37a applies further pressure to the portion 49 as the mixing blade 37a travels from the position of Fig. 6(b) to the position of Fig. 6(c), the portion 49 is urged against and between the stationary blades 44. The stationary blades 44 part the portion 49 into three portions 49a, see Fig. 7, as the mixing blade 37a moves towards the position of Fig. 6(c). Further movement of the mixing blade 37a in the direction of the arrow A beyond the position of Fig. 6(c) causes the mixing blade 37a to rip the three portions 49a from the portion of the block 48 supported on the stationary blades 44. The ripped portions 49a are delivered into the interior region 28 for subsequent mixing with other ingredients of the animal feed. This ripping action is facilitated by the fact that the stationary blades 44 separate the original portion 49 of silage into three portions 49a. As the mixing blade 37a moves further in the direction of the arrow A, the next mixing blade 37 engages the block 48 of silage material and acts on the block 48 in similar manner as the mixing blade 37a, thereby forming a further portion 49 which is subsequently divided into three portions 49a and ripped from the block 48. This action continues as the mixing blades sequentially engage the block 48 of silage material until the block of silage material 48 has been completely broken up. Mixing of the silage material with the ingredients then takes place in the interior region 28.

Returning to the dispensing compartment 20, the auger screw 22 is carried on a shaft 50 rotatably mounted in bearings (not shown) in the end walls 7 and 8. Dispensing spikes 51 extending radially from the shaft 50 deliver animal feed through the dispensing outlet 21. A door 52 hinged at 53 closes the dispensing outlet 21. A chute 54 directs animal feed from the outlet 21. A hydraulic ram (not shown) operates the door 52 through a chain 55. The drive transmission means (not shown) which drives the mixing rotor 30 in the direction of the arrow A also drives the auger screw 22 in the direction of the arrow B, see Fig. 4, for dispensing animal feed through the outlet 21.

In use, with the closure member 25 closing the access opening 19 and with the mixing rotor 30 rotating, a block 48 of silage material is delivered into the open mouth 29 of the container 2. The silage block 48 is broken up as described by the co-operating action of the rotor 30 with the stationary blades 44 as already described. On the silage block being broken up, other ingredients are added to the silage in the interior region 28. The broken up silage and ingredients are mixed in the interior region 28 by the action of the mixing blades 37 as the mixing rotor 30 rotates in the direction of the arrow A. When the silage and ingredients have been thoroughly mixed, the animal feed is ready for dispensing. The closure member 25 is raised into the open position illustrated in Fig. 2. The rotating action of the mixing rotor 30 in the direction of the arrow A urges the mixed animal feed into the dispensing compartment 20 which is in turn discharged through the outlet 21 by the action of the auger screw 22 and the dispensing spikes 51.

If desired, the other ingredients may be delivered into the container simultaneously with the silage block 48 or in any other desired sequence.

Needless to say, while the action of the apparatus has been described in breaking up a single block of silage material, a plurality of blocks of silage material may be delivered into the open mouth for simultaneous breaking up.

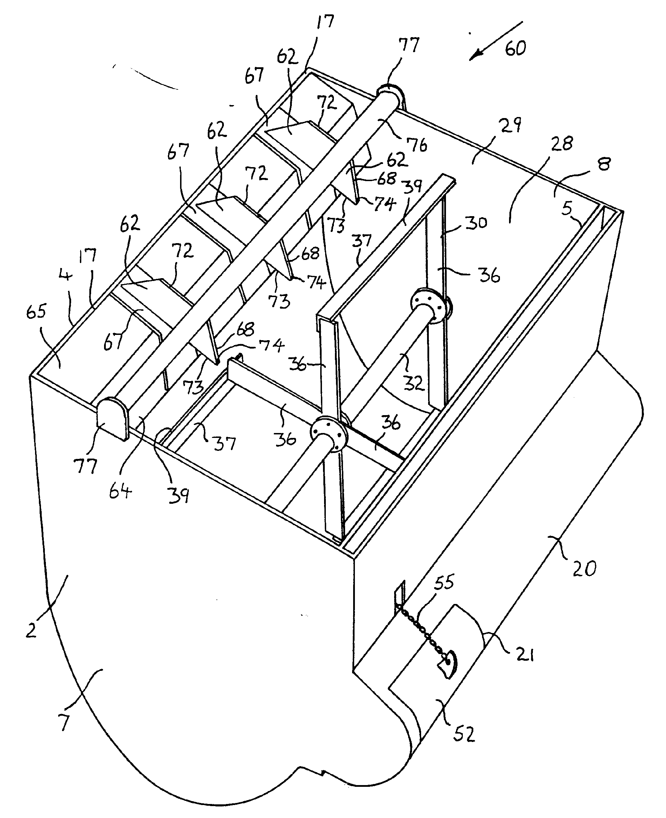

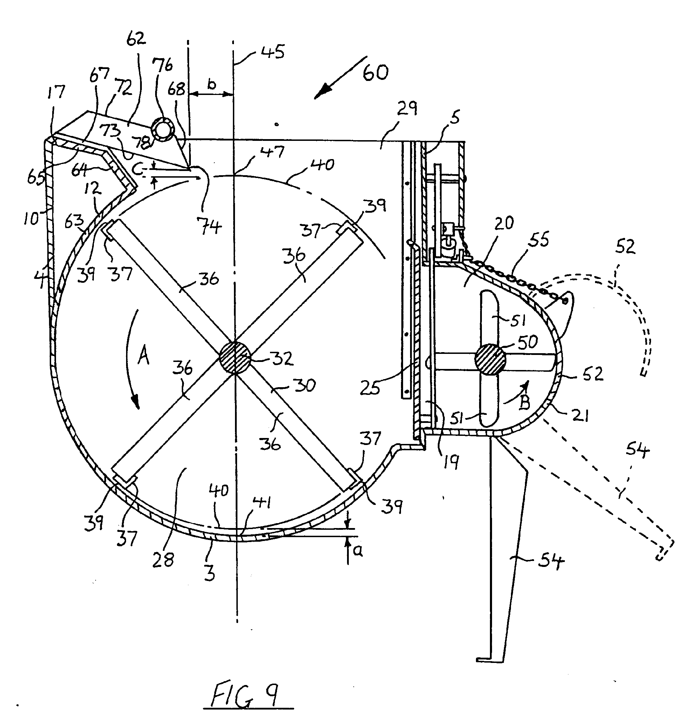

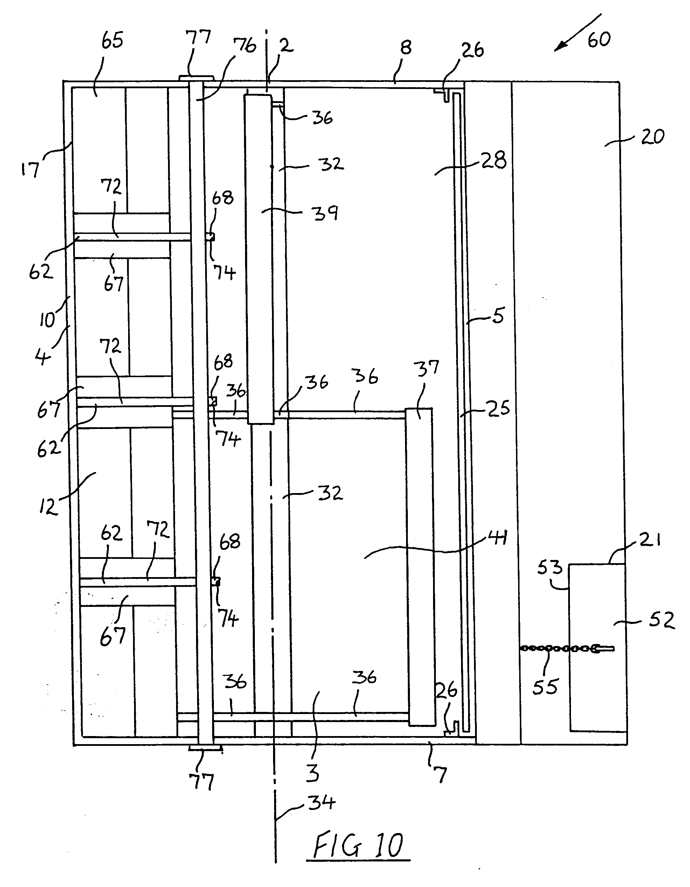

Referring now to Figs. 8 to 12 there is illustrated apparatus according to another embodiment of the invention indicated generally by the reference numeral 60 also for breaking up blocks of fibrous material, namely, silage material and for subsequently mixing the silage material with other ingredients for an animal feed ration. The apparatus 60 is substantially similar to the apparatus 1 described with reference to Figs. 1 to 7 and similar components are identified by the same reference numeral. The main difference between this apparatus 60 and the apparatus 1 is in the construction and mounting of the stationary blades which in this embodiment of the invention are indicated by the reference numeral 62. The construction of the side wall 4 is also slightly different to that of the apparatus 1. In this embodiment of the invention, the inner plate 12 of the side wall 4 comprises a curved wall 63 substantially similar to the curved wall 14 of the apparatus 1 and an inclined wall 64 which extends from the curved wall 63 to a less inclined top wall 65. The top wall 65 extends to the outer panel 10 and joins the outer panel 10 at 17.

Three elongated, parallel, spaced apart stationary blades 62 of steel plate are provided above the mixing rotor 30. The stationary blades 62 are equi-spaced from each other. The spacing between the stationary blades 62 adjacent the end walls 7 and 8 and the respective end walls 7 and 8 is similar to the spacing between adjacent stationary blades 62. Each stationary blade 62 is welded to a mounting bracket 67 of steel plate material which in turn is welded to the inclined wall 64 and the top wall 65. The mounting bracket 67, the inclined wall 64 and the top wall 65 act as mounting means for mounting the stationary blades to the container 2. The stationary blades 62 extend in a generally inwardly, downwardly direction into the open mouth 29 and terminate in free ends 68. An upper edge 72 of each stationary blade 62 converges towards a lower edge 73 at the free end 68 to form a lower tip 74. The stationary blades 62 extend generally transversely of the rotational axis 34 of the mixing rotor 30 and extend towards the vertical plane 45 extending upwardly from the rotational axis 34. The distance "b" from the lower tip 74 of the free end 68 of each stationary blade 62 from the vertical plane 45 in this case is 15% of the diameter D. The distance "c" of the nearest point of each stationary blade 62 from the locus 40 of the rotor 30, which in this case is the distance between the locus 40 and the lower tip 74 of each blade 62, is 25 mm.

A diverting means for engaging and diverting silage material from the silage block back into the open mouth 29 of the container 2 comprises an elongated diverting member 76 of tubular steel. The diverting member 76 is mounted on a pair of brackets 77 welded to the respective end walls 7 and 8 of the container 2 and extends transversely and sidewardly of the stationary blades 62. Recesses 78 in the stationary blades 62 spaced apart from the lower tips 74 engage the diverting member 76 which is welded to the stationary blades 62 in the recesses 78.

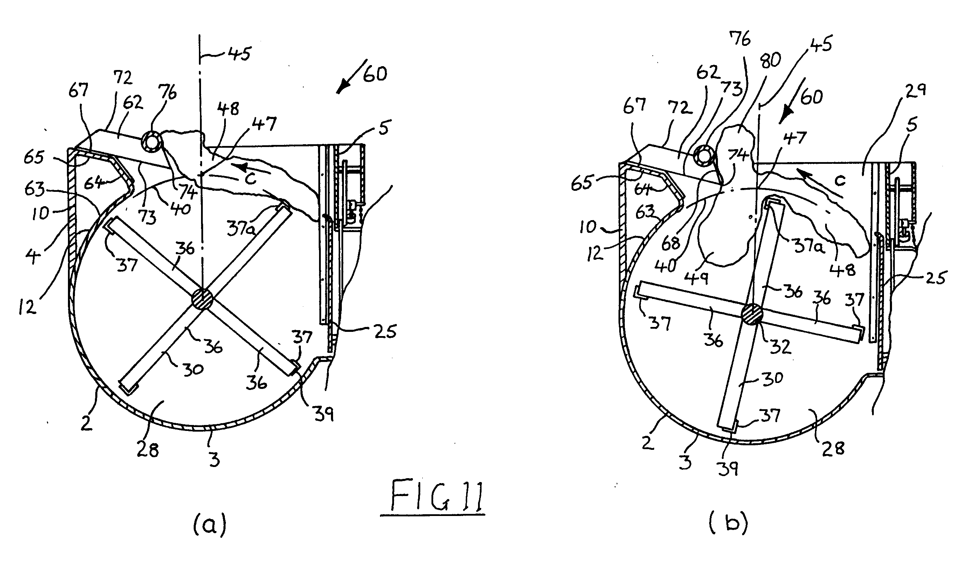

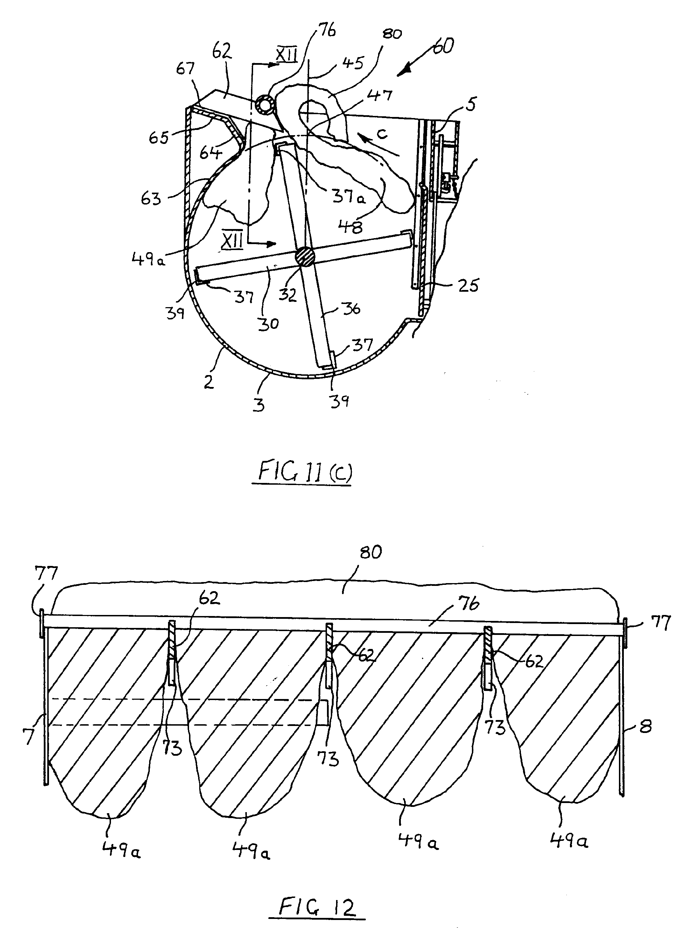

In use, the action of the mixing blades 37 of the mixing rotor 30 co-operating with the stationary blades 62 as the mixing rotor 30 rotates, breaks up the silage blocks with a similar action to the action of the mixing blades 37 co-operating with the stationary blades 44 of the apparatus 1 as already described. The action of the mixing blades 37 of the rotor on the silage block is illustrated in Figs. 11(a) to (c) and Fig. 12. As can be seen, the mixing blade 37a of the apparatus 60 operates in substantially similar fashion to the mixing blade 37a of the apparatus 1 and a portion 49 of the silage block 48 is formed as the mixing blade 37a moves from the position illustrated in Fig. 11(a) to Fig. 11(b). As the mixing blade 37a moves from the position illustrated in Fig. 11(b) to the position illustrated in Fig. 11(c), the portion 49 of silage is urged against and between the stationary blades 62. The stationary blades 62 separate the portion 49 into two portions 49a. Further movement of the mixing blade 37a in the direction of the arrow A beyond the position of Fig. 11(c) causes the portions 49a to be ripped from the portion of the silage block 48 supported on the stationary blade 62. The diverting member 76 engages an upper portion 80 of the silage block 48 in the event that the action of the mixing rotor 30 tends to urge the silage block 48 in a direction tangential to its rotation, namely, in the direction of the arrow C, see Figs. 11(a) to (c). The portion 80 is directed by the diverting member 76 back into the open mouth 29 and in turn the interior region 28. This, it has been found, further facilitates the breaking up of the silage.

It will be appreciated that while the apparatus has been described as comprising a container of particular shape and construction, the apparatus may comprise a container of any other shape and construction. It will of course be appreciated that while it is preferable, it is not essential that the container should have a dispensing compartment attached thereto. Indeed, the container could be of a simple construction having a base, side walls and end walls. It will, however, be appreciated that by providing the base of semi-cylindrical construction, better mixing of the silage and other ingredients is achieved.

While the container has been described as comprising a rotor of particular shape and construction, rotors of other shape and construction may be provided. Where the rotor is provided with mixing blades, more or less mixing blades may be provided. Indeed, a single mixing blade may be adequate. Additionally, it is envisaged that where the rotor is provided with mixing blades, the mixing blades need not extend longitudinally of the rotor axis, the mixing blades may be of any desired angle, and indeed, may form part or all of a helix extending along the mixing rotor.

While the apparatus has been described for use in breaking up blocks or slabs of silage material and mixing the silage material with other ingredients, the apparatus may be used for breaking up blocks or slabs of other fibrous material. Furthermore, while the apparatus has been described for breaking up blocks of silage material of weight up to 2,000 kilograms, it has been found that the apparatus is particularly suitable for breaking up blocks of silage material in the range of 500 to 2,000 kilograms. However, it will be readily apparent to those skilled in the art that blocks of less than 500 kilograms could readily easily be handled by the apparatus. Indeed, it is believed that the apparatus would be capable of breaking up blocks or slabs of silage material of weight greater than 2,000 kilograms, and needless to say, by increasing the size of the apparatus and the shear strength of the appropriate components in the apparatus, the apparatus could be constructed to break up blocks of silage or indeed any other fibrous material of weight significantly greater than 2,000 kilograms.

It will of course be appreciated that the apparatus may be smaller or larger than that described. Indeed, it is envisaged that a range of apparatus will be produced of varying sizes and capacity. Needless to say, in such cases, the appropriate components will be scaled up or scaled down. For example, the outer peripheral diameter of the rotor will be varied to accommodate varying sizes of apparatus.

Needless to say, stationary blades of other shape and construction may be provided. While in both cases the stationary blades have been described as being spaced apart at their nearest point to the locus of the periphery of the mixing rotor specific distances, it is envisaged that good results would be achieved provided the distance between the stationary blades at their nearest point to the locus of the outer periphery of the mixing rotor did not exceed 120 mm. Indeed, it is envisaged that relatively good results would be achieved with a distance between the stationary blades at their nearest point to the locus of the outer periphery of the mixing rotor is less than 90 mm. In fact, it has been found that the nearer the stationary blade can be mounted to the locus of the outer Periphery of the mixing rotor, the more efficient the results achieved from the apparatus are. However, in practice, some clearance must be left between the stationary blades and the locus of the outer periphery of the mixing rotor. In general, it has been found that it is not practical to have a clearance between the stationary blades and the locus of the periphery of the mixing rotor of less than 5 mm. However, in certain cases, it is envisaged that the apparatus could be provided with a smaller clearance.

It has also been found that in certain cases advantageous results are achieved by providing stationary blades which extend through the vertical plane extending from the rotational axis of the rotor, and indeed, in certain cases, it is envisaged that relatively long stationary blades may be provided which would extend from one side wall almost to the opposite side wall of the container defining the open mouth, and indeed, the stationary blades may extend from one side wall to the opposite side wall.

It is also envisaged that the stationary blades may be provided with a portion extending downwardly from the free end. In particular, where a blade of such construction is provided, it is envisaged that the blade will extend substantially across the rotor above the rotor and would extend downwardly towards a horizontal plane containing the rotational axis of the rotor.

While the stationary blades have been described as extending from mounting means provided by the side wall of the container, any other suitable mounting means for mounting the stationary blades may be provided. Indeed, it is envisaged that the stationary blades may be releasably mounted on the container by, for example, suitable fastening means, such as, for example, screws, nuts, bolts or the like. For example, in the case of the apparatus of Figs. 8 to 12, it is envisaged that the mounting brackets from which the stationary blades extend may be secured to the side wall by bolts, screws or the like. Further, it is envisaged that the brackets 77 securing the diverting means to the end walls of the container may likewise be releasably secured to the container by screws, bolts or the like.

In fact, it is envisaged in certain cases, the apparatus according to the invention may be provided with mounting means which would releasably engage and receive the stationary blades.

Further, while the stationary blades have been described as being equally spaced, this is not essential, the blades may be unequally spaced. Furthermore, it is not essential that the stationary blades should be parallel. They may be arranged at any angle relative to each other. Furthermore, while the stationary blades have been described as being of equal length, the stationary blades may be of different lengths in the same apparatus.

While in the two embodiments of the invention described, the stationary blades extend from the side wall towards the vertical plane extending from the rotational axis of the rotor to a position where the free end of the stationary blade is spaced apart from the said vertical plane a distance of 15% of the diameter of the rotor, it is envisaged that the distance of the free end of the stationary blade from the said vertical plane may be as much as 25% of the diameter of the rotor.

While a diverting means of a particular shape and construction has been described, other suitable diverting means may be provided. Further, the diverting means could be located at other positions on the stationary blades other than the position described in the apparatus described with reference to Figs. 8 to 12.

It is also envisaged that in certain cases stationary blades may be provided on both opposite side walls of the container, and such stationary blades on one side wall would be independent of those on the other side wall.

While specific numbers of stationary blades have been described, any desired number of stationarv blades may be provided. Indeed, in certain cases, it is envisaged that a single stationary blade will be adequate.

While the apparatus has been described as comprising a rotor of a specific outer peripheral diameter, rotors of other size could be used.

## Claims

1. Apparatus for breaking up a block of fibrous material and mixing the fibrous material, the apparatus (1,60) comprising a container (2) defining a hollow interior region (28) and an open mouth (29) to the interior region (28), a mixing rotor (30) for mixing the material rotatably mounted about a rotational axis (34) in the hollow interior region (28) below the open mouth (29) characterised in that at least one elongated stationary blade (44,62) is mounted above the mixing rotor (30) and spaced apart from the periphery (39) of the mixing rotor (30) adjacent the open mouth (29) for engaging the block (48) of fibrous material and for cooperating with the mixing rotor (30) for breaking up the block (48) of fibrous material, the stationary blade (44,62) extending transversely relative to the rotational axis (34) of the mixing rotor (30) for partly supporting the block (48) of fibrous material above the mixinq rotor (30) and for receivinq portions (49a) of the block of fibrous material on each side thereof so that on rotation of the mixing rotor (30) the mixing rotor (30) engages the said portions (49a) and rips the said portions (49a) separately from the block (48) of fibrous material, and mounting means (15,64,65) is mounted on the container (2) for mounting the stationary blade (44,62) to the container (2).

2. Apparatus as claimed in Claim 1 characterised in that the mounting means (15,64,65) is spaced apart from and to one side of a vertical plane (45) extending upwardly from the rotational axis (34), the stationary blade (44,62) extending generally in a direction towards the vertical plane (45) and terminating in a free end (46,68).

3. Apparatus as claimed in Claim 2 characterised in that the mixing rotor (30) comprises a mixing blade (37) extending in a direction generally longitudinally of the rotational axis (34), the mixing blade (37) defining the outer periphery (39) of the mixing rotor (30), the stationary blade (44,62) being located so that on rotation of the mixing rotor (30), as the mixing blade (37) rotates to its top dead centre position (47) relative to the container (2), the mixing blade (37) is moving towards the free end (46,68) of the stationary blade (44,62).

4. Apparatus as claimed in Claim 3 characterised in that the stationary blade (44,62) is located so that as the mixing blade (37) is moving through its top dead centre position (47), the mixing blade (37) is moving towards the free end (46,68) of the stationary blade (44,62).

5. Apparatus as claimed in any of Claims 2 to 4 characterised in that the free end (46,68) of the stationary blade (44,62) terminates at a distance from the vertical plane (45) extending upwardly from the rotational axis (44) of not more than 25% of the diameter (D) of the outer periphery (39) of the mixing rotor (30).

6. Apparatus as claimed in any preceding claim characterised in that the stationary blade (44,62) is mounted adjacent the mixing rotor (30) and at its nearest position relative to the mixing rotor (30), the stationary blade (44,62) is spaced apart a distance (C) from a locus (40) of the outer periphery (39) of the mixing rotor (30) of not more than 120 mm.

7. Apparatus as claimed in any preceding claim characterised in that the stationary blade (44,62) extends into the open mouth (29) of the container (2), and extends in a generally inwardly, downwardly direction in the open mouth (29).

8. Apparatus as claimed in any preceding claim characterised in that diverting means (76) extend on each side of the stationary blade (62) for diverting the fibrous material from the stationary blade (62), the diverting means (76) extending transversely of the stationary blade.

9. Apparatus as claimed in Claim 8 characterised in that the stationary blade (62) comprises an elongated plate member (62) having an upper edge (72) and a lower edge (73), the upper edge (72) converging downwardly towards the lower edge (73) to form a lower tip (74) defining the free end (68) of the stationary blade (62), and the diverting means (76) being provided on the stationary blade (62) adjacent the upper edge (72) at a position spaced apart from the lower tip (74).

10. Apparatus as claimed in any preceding claim characterised in that the container (2) comprises a base (3) of semi-cylindrical shape, and a straight side wall (5) extending upwardly from one side of the base (3) and a curved side wall (4) extending in a generally upward direction from the other side of the base (3), the ends of the container being closed by a pair of end walls (7,8), the base (3) and curved side wall (4) defining an axis of generation substantially coinciding with the rotational axis (34) of the mixing rotor (30), the mixing rotor (30) comprising a main shaft (32) rotatably mounted in the end walls (7,8), and at least two mixing blades (37) being spaced apart circumferentially around the shaft (32) and being mounted on radial carrier members (36) extending radially from the shaft (32).

11. Apparatus as claimed in any preceding claim characterised in that a plurality of spaced apart parallel stationary blades (44,62) are provided.

12. A method for breaking up and mixing a block of fibrous material using the apparatus (1) of any preceding claim wherein the method comprises the steps of delivering the block (48) of fibrous material into the open mouth (29) of the container (2), rotating the mixing rotor (30) to engage and urge the block (48) of fibrous material against the at least one stationary blade (44,62) for breaking up of the block (48), and for mixing broken up portions (49a) of the block (48) with the mixing rotor (30), and wherein said rotating comprises rotating the mixing rotor (30) for engaging and urging portions (49a) of the block (48) on each side of the stationary blade (44,62), and comprises further rotating the mixing rotor (30) for ripping the said portions (49a) of the block (48) separately from the block (48).

13. Apparatus for breaking up a block of fibrous material and mixing the fibrous material, the apparatus (1,60) comprising a container (2) defining a hollow interior region (28) and an open mouth (29) to the interior region (28), a mixing rotor (30) for mixing the material rotatably mounted about a rotational axis (34) in the hollow interior region (28) below the open mouth (29), characterised in that a mounting means (15,64,65,67) is mounted on the container (2) for mounting at least one elongated stationary blade (44,62) above the mixing rotor (30) spaced apart from the periphery (39) of the mixing rotor (30) adjacent the open mouth (29) so that the block (48) of fibrous material engages the stationary blade (44,62) and the stationary blade co-operates with the mixing rotor (30) for breaking up of the block (48) of fibrous material, and wherein the mounting means (15,64,65,67) mounts the stationary blade (44,62) so that the stationary blade (44,62) extends transversely relative to the rotational axis (34) of the mixing rotor (30) for partly supporting the block (48) of fibrous material above the mixing rotor (30) and for receiving portions (49a) of the block (48) on each side thereof so that on rotation of the mixing rotor (30), the mixing rotor (30) engages the said portions (49a) and rips the said portions (49a) separately from the block (48) of fibrous material.

## Patentansprüche

1. Vorrichtung (1, 60) zum Zerkleinem eines Blocks aus faserigem Material und zum Mischen des faserigen Materials, mit einem Behälter (2), der einen hohlen Innenbereich (28) sowie einen offenen Zugang (29) zum Innenbereich (28) ausbildet, und mit einem Mischrotor (30) zum Mischen des Materials, der im hohlen Innenbereich (28) unterhalb des offenen Zugangs (29) um eine Rotationsachse (34) drehbar befestigt ist, **dadurch** **gekennzeichnet,** daß wenigstens ein längliches, feststehendes Blatt (44, 62) über dem Mischrotor (30) mit Abstand von dessen Umfang (39) in der Nähe des offenen Zugangs (29) befestigt ist, um mit dem Block (48) aus faserigem Material in Eingriff zu kommen und um mit dem Mischrotor (30) zum Zerkleinern des Blocks (48) aus faserigem Material zusammenzuwirken, wobei das feststehende Blatt (44, 62) quer zur Rotationsachse (34) des Mischrotors (30) verläuft, um den Block (48) aus faserigem Material oberhalb des Mischrotors (30) zum Teil zu stützen und um Abschnitte (49a) des Blocks aus faserigem Material auf jeder Blattseite aufzunehmen, so daß bei Rotation des Mischrotors (30) dieser mit den besagten Abschnitten (49a) in Eingriff kommt und sie (49a) einzeln vom Block (48) aus faserigem Material abreißt, und daß Befestigungsmittel (15, 64, 65) am Behälter (2) angebracht sind, um das feststehende Blatt (44, 62) am Behälter (2) zu befestigen.

2. Vorrichtung nach Anspruch 1, dadurch gekennzeichnet, daß die Befestigungsmittel (15, 64, 65) mit Abstand von und auf einer Seite einer Vertikalebene (45) angeordnet sind, die von der Rotationsachse (34) nach oben verläuft, wobei sich das feststehende Blatt (44, 62) allgemein in Richtung zur Vertikalebene (45) hin ersteckt und mit einem freien Ende (46, 68) abschließt.

3. Vorrichtung nach Anspruch 2, dadurch gekennzeichnet, daß der Mischrotor (30) ein Mischblatt (37) aufweist, das allgemein in Längsrichtung der Rotationsachse (34) verläuft und den Außenumfang (39) des Mischrotors (30) bildet, wobei das feststehende Blatt (44, 62) so angeordnet ist, daß bei einer Rotation des Mischrotors (30) sich das Mischblatt (37), wenn es (37) zu seiner in bezug auf den Behälter (2) obersten Totpunktslage (47) hin dreht, auf das freie Ende (46, 68) des feststehenden Blattes (44, 62) zubewegt.

4. Vorrichtung nach Anspruch 3, dadurch gekennzeichnet, daß das feststehende Blatt (44, 62) so angeordnet ist, daß sich das Mischblatt (37), wenn es (37) seine oberste Totpunktslage (47) durchläuft, auf das freie Ende (46, 68) des feststehenden Blattes (44, 62) zubewegt.

5. Vorrichtung nach einem der Ansprüche 2 bis 4, dadurch gekennzeichnet, daß das freie Ende (46, 68) des feststehenden Blattes (44, 62) in einem Abstand von der von der Rotationsachse (34) nach oben verlaufenden Vertikalebene (45) endet, der nicht größer als 25 % des Durchmessers (D) des Außenumfangs (39) des Mischrotors (30) ist.

6. Vorrichtung nach einem der vorhergehenden Ansprüche, dadurch gekennzeichnet, daß das feststehende Blatt (44, 62) in der Nähe des Mischrotors (30) befestigt ist und an seiner dem Mischrotor (30) nahesten Stelle in einem Abstand (C) von nicht mehr als 120 mm von einer Stelle (40) des Außenumfangs (39) des Mischrotors (30) angeordnet ist.

7. Vorrichtung nach einem der vorhergehenden Ansprüche, dadurch gekennzeichnet, daß das feststehende Blatt (44, 62) in den offenen Zugang (29) des Behälters (2) hineinragt und im offenen Zugang (29) allgemein nach innen und nach unten verläuft.

8. Vorrichtung nach einem der vorhergehenden Ansprüche, dadurch gekennzeichnet, daß Ableitmittel (76) auf jeder Seite des feststehenden Blattes (62) zum Ableiten des faserigen Materials von dem feststehenden Blatt (62) verlaufen, wobei sich die Ableitmittel (76) quer zum feststehenden Blatt erstrecken.

9. Vorrichtung nach Anspruch 8, dadurch gekennzeichnet, daß das feststehende Blatt (62) ein längliches Plattenteil (62) mit einem oberen Rand (72) und einem unteren Rand (73) aufweist, wobei der obere Rand (72) nach unten auf den unteren Rand (73) zuläuft, um eine untere Spitze (74) auszubilden, die das freie Ende (68) des feststehenden Blattes (62) bildet, und wobei die Ableitmittel (76) auf dem feststehenden Blatt (62) in der Nähe des oberen Randes (72) an einer von der unteren Spitze (74) beabstandeten Stelle vorgesehen sind.

10. Vorrichtung nach einem der vorhergehenden Ansprüche, dadurch gekennzeichnet, daß der Behälter (2) einen Boden (3) von halbzylindrischer Form und eine gerade Seitenwand (5), die von einer Seite des Bodens (3) aus nach oben verläuft, sowie eine gekrümmte Seitenwand (4) aufweist, die von der anderen Seite des Bodens (3) aus allgemein nach oben verläuft, wobei die Enden des Behälters durch ein Paar von Endwänden (7, 8) geschlossen sind, der Boden (3) und die gekrümmte Seitenwand (4) eine Erzeugungsachse festlegen, die im wesentlichen mit der Rotationsachse (34) des Mischrotors (30) übereinstimmt, ferner der Mischrotor (30) eine Hauptwelle (32) umfaßt, die drehbar in den Endwänden (7, 8) montiert ist, und wobei wenigstens zwei Mischblätter (37) mit Abstand zueinander auf dem Umfang um die Welle (32) herum angeordnet und an von der Welle (32) aus radial verlaufenden Trägerteilen (36) befestigt sind.

11. Vorrichtung nach einem der vorhergehenden Ansprüche, dadurch gekennzeichnet, daß eine Mehrzahl von mit Abstand zueinander parallel verlaufenden feststehenden Blättern (44, 62) vorgesehen sind.

12. Verfahren zum Zerkleinern und Mischen eines Blocks aus faserigem Material unter Verwendung der Vorrichtung (1) nach einem der vorhergehenden Ansprüche, wobei das Verfahren die Schritte des Zuführens des Blocks (48) aus faserigem Material in den offenen Zugang (29) des Behälters (2) und des Drehens des Mischrotors (30) umfaßt. um den Block (48) aus faserigem Material zu ergreifen und zu dessen (48) Zerkleinerung gegen das wenigstens eine feststehende Blatt (44, 62) zu drücken sowie um abgetrennte Abschnitte (49a) des Blocks (48) mit dem Mischrotor (30) zu mischen, und wobei das besagte Drehen ein Drehen des Mischrotors (30) zum Ergreifen und Drücken von Abschnitten (49a) des Blocks (48) auf jeder Seite des feststehenden Blattes (44, 62) und ein Weiterdrehen des Mischrotors (30) enthält, um die besagten Abschnitte (49a) des Blocks (48) einzeln von diesem (48) abzureißen.

13. Vorrichtung (1, 60) zum Zerkleinern eines Blockes aus faserigem Material und zum Mischen des faserigen Materials, mit einem Behälter (2), der einen hohlen Innenbereich (28) und einen offenen Zugang (29) zum Innenbereich (28) ausbildet, und mit einem Mischrotor (30) zum Mischen des Materials, der im hohlen Innenbereich (28) unterhalb des offenen Zugangs (29) um eine Rotationsachse (34) drehbar befestigt ist, dadurch gekennzeichnet, daß Befestigungsmittel (15, 64, 65, 67) am Behälter (2) angebracht sind, um wenigstens ein längliches feststehendes Blatt (44, 62) oberhalb des Mischrotors (30) mit Abstand von dessen Umfang (39) in der Nähe des offenen Zugangs (29) so zu befestigen, daß der Block (48) aus faserigem Material mit dem feststehenden Blatt (44, 62) in Eingriff kommt und das feststehende Blatt mit dem Mischrotor (30) zum Zerkleinern des Blocks (48) aus faserigem Material zusammenwirkt, wobei die Befestigungsmittel (15, 64, 65, 67) das feststehende Blatt (44, 62) so befestigen, daß es (44, 62) quer zur Rotationsachse (34) des Mischrotors (30) verläuft, um den Block (48) aus faserigem Material oberhalb des Mischrotors (30) zum Teil zu stützen und um Abschnitte (49a) des Blocks (48) aus faserigem Material auf jeder seiner Seiten so aufzunehmen, daß bei einer Rotation des Mischrotors (30) dieser mit den besagten Abschnitten (49a) in Eingriff kommt und sie (49a) einzeln vom Block (48) aus faserigem Material abreißt.

## Revendications

1. Dispositif pour briser un bloc de matériau fibreux et pour le mélange du matériau fibreux, dispositif (1, 60) comprenant un récipient (2) définissant une zone interne creuse (28) et une embouchure (29) vers la zone interne creuse (28), un rotor de mélange (30) pour le mélange du matériau monté tournant selon un axe de rotation (34) dans la zone interne creuse (28) en dessous de l'embouchure (29),
dispositif caractérisé en ce qu'au moins une lame fixe (44, 62) allongée est montée au dessus du rotor de mélange (30) et est espacée de la périphérie (39) du rotor de mélange (30) adjacente à l'embouchure (29) pour coopérer avec le bloc (48) de matériau fibreux et pour coopérer avec le rotor de mélange (30) afin de briser le bloc (48) de matériau fibreux, la lame fixe (44, 62) s'étendant transversalement par rapport à l'axe de rotation (34) du rotor de mélange (30) pour supporter partiellement le bloc (48) de matériau fibreux au dessus du rotor de mélange (30) et pour recevoir des parties (49a) du bloc (48) de matériau fibreux sur chaque côté de façon à ce que lors d'une rotation du rotor de mélange (30), le rotor de mélange (30) coopère avec lesdites parties (49a) et arrache lesdites parties (49a) hors du bloc (48) de matériau fibreux et des moyens de montage (15, 64, 65) sont montés dans le récipient (2) pour le montage de la lame fixe (44, 62) sur le récipient (2).

2. Dispositif selon la revendication 1, caractérisé en ce que les moyens de montage (15, 64, 65) sont espacés à partir et vers un côté d'un plan vertical (45) s'étendant vers le haut à partir de l'axe de rotation (34), la lame fixe (44, 62) s'étendant globalement en direction du plan vertical (45) et se terminant en une extrémité libre (46, 68).

3. Dispositif selon la revendication 2, caractérisé en ce que le rotor de mélange (30) comprend une lame de mélange (37) s'étendant globalement dans une direction longitudinale à l'axe de rotation (34), la lame de mélange (37) définissant la périphérie externe (39) du rotor de mélange (30), la lame fixe (44, 62) étant située de façon à ce que lors d'une rotation du rotor de mélange (30), tandis que la lame de mélange (37) tourne vers sa position centrale de point-mort haut (47) par rapport au récipient (2), la lame de mélange (37) se déplace vers l'extrémité libre (46, 68) de la lame fixe (44, 62).

4. Dispositif selon la revendication 3, caractérisé en ce que la lame fixe (44, 62) est située de façon à ce que, lors d'un déplacement de la lame de mélange (37) par sa position centrale de point-mort haut (47), la lame de mélange (37) se déplace vers l'extrémité libre (46, 68) de la lame fixe (44, 62).

5. Dispositif selon l'une quelconque des revendications 2 à 4, caractérisé en ce que l'extrémité libre (46, 68) de la lame fixe (44, 62) se termine sur une distance du plan vertical (45) s'étendant vers le haut à partir de l'axe de rotation (34) ne dépassant pas 25 % du diamètre (D) de la périphérie externe (39) du rotor de mélange (30).

6. Dispositif selon l'une quelconque des revendications précédentes, caractérisé en ce que la lame fixe (44, 62) est montée adjacente au rotor de mélange (30) et sur sa position la plus proche par rapport au rotor de mélange (30), la lame fixe (44, 62) est espacée d'une distance (C) d'un 40 de la périphérie externe (39) du rotor de mélange (30) ne dépassant pas 120 mm.

7. Dispositif selon l'une quelconque des revendications précédentes, caractérisé en ce que la lame fixe (44, 62) s'étend dans l'embouchure (29) du récipient (2) et s'étend globalement selon une direction vers l'intérieur et vers le bas dans l'embouchure (29).

8. Dispositif selon l'une quelconque des revendications précédentes, caractérisé en ce qu'un moyen de déviation (76) s'étend sur chaque côté de la lame fixe (62) pour dévier le matériau fibreux de la lame fixe (62), le moyen de déviation (76) s'étendant transversalement à la lame fixe.

9. Dispositif selon la revendication 8, caractérisé en ce que la lame fixe (62) comprend une pièce allongée de plaque (62) possédant un bord supérieur (72) et un bord inférieur (73), le bord supérieur (72) convergeant vers le bas en direction du bord inférieur (73) pour former un bout inférieur (74) définissant l'extrémité libre (68) de la lame fixe (62) et le moyen de déviation (76) étant prévu sur la lame fixe (62) adjacent au bord supérieur (72) sur une position espacée du bout inférieur (74).

10. Dispositif selon l'une quelconque des revendications précédentes, caractérisé en ce que le récipient (2) comprend une base (3) de forme semi-cylindrique et une paroi latérale droite (5) s'étendant vers le haut à partir d'un côté de la base (3) et une paroi latérale incurvée (4) s'étendant dans une direction globale vers le haut à partir de l'autre côté de la base (3), les extrémités du récipient étant fermées par une paire de parois d'extrémité (7, 8), la base (3) et la paroi latérale incurvée (4) définissant un axe de génération coïncidant pratiquement avec l'axe de rotation (34) du rotor de mélange (30), le rotor de mélange (30) comprenant un arbre principal (32) monté tournant dans les parois d'extrémité (7, 8) et au moins deux lames de mélange (37) espacées circonférenciellement autour de l'arbre (32) et étant montées sur des pièces radiales de support (36) s'étendant radialement à partir de l'arbre (32).

11. Dispositif selon l'une quelconque des revendications précédentes, caractérisé en ce qu'une pluralité de lames fixes (44, 62) parallèles et espacées sont prévues.

12. Procédé pour briser et pour mélanger un bloc de matériau fibreux utilisant un dispositif (1) selon l'une quelconque des revendications précédentes, procédé comprenant des étapes de délivrance du bloc (48) de matériau fibreux dans l'embouchure (29) du récipient (2), de mise en rotation du rotor de mélange (30) pour coopérer et pour pousser le bloc (48) de matériau fibreux contre au moins une lame fixe (44, 62) pour briser le bloc (48) de matériau fibreux et pour mélanger les parties brisées (49a) du bloc (48) de matériau fibreux avec le rotor de mélange (30) et selon lequel ladite rotation comprend une rotation du rotor de mélange (30) pour coopérer et pour pousser les parties (49a) du bloc (48) de matériau fibreux sur chaque côté de la lame fixe (44, 62), procédé comprenant, de plus, une mise en rotation du rotor de mélange (30) pour arracher lesdites parties (49a) du bloc (48) de matériau fibreux à l'écart du bloc (48) de matériau fibreux.

13. Dispositif pour briser un bloc de matériau fibreux et pour mélanger le matériau fibreux, dispositif (1, 60) comprenant un récipient (2) définissant une zone interne creuse (28) et une embouchure (29) vers la zone interne creuse (28), un rotor de mélange (30) pour mélanger le matériau monté tournant selon un axe de rotation (34) dans la zone interne creuse (28) en dessous de l'embouchure (29),
dispositif caractérisé en ce qu'un moyen de montage (15, 64, 65, 67) est monté sur le récipient (2) pour le montage d'au moins une lame fixe (44, 62) allongée au dessus du rotor de mélange (30) espacée de la périphérie externe (39) du rotor de mélange (30) adjacente à l'embouchure (29) de telle façon que le bloc (48) de matériau fibreux engage la lame fixe (44, 62) et que la lame fixe (44, 62) coopère avec le rotor de mélange (30) pour briser le bloc (48) de matériau fibreux, et dans lequel le moyen de montage (15, 64, 65, 67) supporte la lame fixe (44, 62) de telle façon que la lame fixe (44, 62) s'étende transversalement par rapport à l'axe de rotation (34) du rotor de mélange (30) pour supporter partiellement le bloc (48) de matériau fibreux au dessus du rotor de mélange (30) et pour recevoir des parties (49a) du bloc (48) de matériau fibreux sur chaque côté de telle façon que, lors d'une rotation du rotor de mélange (30), le rotor de mélange (30) coopère avec lesdites parties (49a) et arrache lesdites parties (49a) du bloc (48) de matériau fibreux.
